(19) Europäisches Patentamt
European Patent Office
Office européen des brevets

(11) EP 3 082 527 B1

(12) FASCICULE DE BREVET EUROPEEN

(45) Date de publication et mention de la délivrance du brevet:
04.11.2020 Bulletin 2020/45

(21) Numéro de dépôt: 14828219.7

(22) Date de dépôt: 16.12.2014

(51) Int Cl.:
A47J 36/02 (2006.01)    B05D 5/08 (2006.01)
C09D 179/08 (2006.01)    C08K 5/54 (2006.01)
C08L 79/08 (2006.01)

(86) Numéro de dépôt international:
PCT/FR2014/053368

(87) Numéro de publication internationale:
WO 2015/092262 (25.06.2015 Gazette 2015/25)

(54) **COMPOSITIONS AQUEUSES POUR PRIMAIRE DE REVÊTEMENT ANTIADHÉSIF ET LEUR PROCÉDÉ DE PRÉPARATION**

WÄSSRIGE ZUSAMMENSETZUNGEN FÜR PRIMÄRE ANTIHAFTBESCHICHTUNG SOWIE HERSTELLUNGSVERFAHREN DAFÜR

AQUEOUS COMPOSITIONS FOR PRIMARY ANTI-ADHESIVE COATING AND PREPARATION METHOD THEREOF

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: 20.12.2013 FR 1363355

(43) Date de publication de la demande:
26.10.2016 Bulletin 2016/43

(73) Titulaire: SEB S.A.
69130 Ecully (FR)

(72) Inventeurs:
• GANTILLON, Barbara
F-74320 Leschaux (FR)
• PERILLON, Jean-Luc
F-26130 Saint Paul Trois Chateaux (FR)

(74) Mandataire: SEB Developpement Brevets
SEB Developpement
Direction de la propriété industrielle - Brevets
Campus SEB - CS 90229
112, chemin du Moulin Carron
69134 Ecully Cedex (FR)

(56) Documents cités:
EP-A1- 0 323 882        EP-A1- 0 386 379
EP-A1- 0 386 380        EP-A2- 0 304 022
WO-A1-2013/153337        US-A- 5 043 418

**Description**

La présente invention concerne de manière générale les compositions aqueuses (ou compositions de semi-fini) pour primaire de revêtement antiadhésif à base de résine fluorocarbonée. La présente invention concerne également un procédé de préparation d'une telle composition, une composition de primaire de revêtement antiadhésif incorporant une telle composition, un procédé de préparation d'une telle composition de primaire ainsi qu'un procédé de fabrication d'un article comportant un substrat métallique sur lequel on applique une telle composition de primaire.

Les revêtements antiadhésifs à base de polytétrafluoroéthylène (PTFE) sont largement répandus dans le domaine des articles culinaires. Ils sont réalisés à partir d'au moins une couche contenant la résine perfluorée et une résine d'accroche. Cette couche primaire est alors revêtue d'une ou plusieurs couches de PTFE dans lesquelles la quantité de PTFE est graduellement augmentée.

Les résines d'accroche permettant l'adhésion de ce primaire et des autres couches fluorées sur le support sont généralement de type polyamide-imide (PAI), polysulfure de phénylène (PPS), polyéthersulfone (PES), polyétheréthercétone (PEEK).

Dans le cas particulier où l'on souhaite obtenir des primaires de couleur claire, on préfère les résines PES, PPS ou PEEK.

Toutefois, la mise en œuvre de ces résines n'est pas facile, car elles sont peu solubles autrement que dans des solvants aprotiques polaires, qui sont pour la plupart soumis à un étiquetage en tant que produit nocif, voire même toxique, selon la réglementation REACH. Ces résines sont en pratique utilisables en poudre. Cependant, l'obtention de poudres de faible granulométrie est difficile et coûteuse ce qui fait qu'il est difficile de broyer ces polymères à une dimension inférieure à d50 égal à 10 $\mu$m. Il s'ensuit que la répartition de ces résines dans la couche de primaire n'est pas homogène et conduit à des pertes d'adhérence à l'usage.

De ce point de vue, les résines PAI, qui sont livrées en solution ou en poudre diluable dans l'eau, sont plus faciles à mettre en œuvre. Elles incorporent toutefois de grandes quantités de solvant. La nécessité d'utiliser des solvants aprotiques polaires (N-éthylpyrrolidone (NEP), N-méthylpyrrolidone (NMP), diméthyléthylène urée (DMEU)) conduit à des impacts sur l'environnement et la santé qui ne sont pas négligeables.

Lorsqu'elles sont livrées en poudre diluable dans l'eau, on s'affranchit alors de la contrainte liée à l'utilisation de solvant mais ces résines PAI montrent également une stabilité thermique qui est jugée insuffisante. En effet, lors de l'étape de frittage du PTFE (réalisée à plus de 370°C et préférentiellement à 415°C), une petite fraction de résine PAI se décompose ce qui est un inconvénient même si ce phénomène est sans incidence sur la plupart des propriétés du revêtement obtenu. De plus, l'utilisation d'une amine labile pour la mise en œuvre en phase aqueuse de la résine PAI conduit à générer une proportion de composés organiques volatiles qui n'est pas négligeable lorsque l'on travaille en milieu aqueux, ce qui induit un jaunissement non acceptable du revêtement obtenu.

D'un autre coté, on connait la préparation de silice greffée par des acides polyamiques (Peng Liu, Iranian polymer Journal 14, (11) 2005, 968-972). Ces silices greffées présentent effectivement des tenues en températures améliorées mais d'une part le composé de départ est une silice déjà existante, et d'autre part l'ensemble des modifications de la silice est réalisé en milieu solvant. Leur utilisation est suggérée (cf. conclusion) dans des milieux solvants ce qui ne résout pas la problématique des contraintes environnementales.

Les documents brevet EP 0386379 et FR 2625450 de Corning Glass Works décrivent tous deux et de manière similaire des mélanges de PAI et d'un aminosilane. Dans la façon de procéder qui est décrite, l'aminosilane est mélangé avec le précurseur de PAI déjà en solution aqueuse, c'est-à-dire que le précurseur de PAI incorpore déjà une amine pour la salification ainsi que, compte tenu du choix de PAI décrit dans les exemples, un solvant, ce solvant étant nécessaire pour la réalisation du mélange sous forme liquide.

Ces documents brevet ne s'exonèrent ni de la présence de l'amine volatile susceptible de générer du jaunissement ni de la présence de solvant aprotique polaire potentiellement toxique.

Pour remédier à ces inconvénients, la demanderesse a mis au point une composition aqueuse à base de polyimide ou de polyamide-imide ou de polyamide-acide amique, contenant un aminosilane ou un silazane.

L'utilisation d'un aminosilane ou d'un silazane permet d'obtenir un polyélectrolyte polyamide-acide amique en émulsion dans l'eau sans utiliser des composés très nucléophiles tels que les amines qui vont s'oxyder et qui vont conduire à former des revêtements très jaunissants. Outre la diminution du jaunissement, d'autres propriétés du revêtement obtenu sont sensiblement améliorées.

Cela permet ainsi de créer un hybride en « surréticulant » la résine PAI par l'intermédiaire des silanols. Ceci est possible parce que l'aminosilane est en quelque sorte préréparti sur la chaine PAI. De plus, cela permet aussi d'améliorer la résistance à l'abrasion du revêtement obtenu en générant dans la formule des nanodomaines de silice obtenus par la condensation des silanols entre eux. Cela permet également d'obtenir une stabilité thermique nettement renforcée du film polymère nanochargé. Une stabilité thermique peut par exemple être mesurée par l'observation du décalage de la température de transition vitreuse d'au moins 20°C et un décalage de la courbe de dégradation thermique sous azote d'au minimum 40°C entre un produit semi-fini standard et un produit semi-fini selon l'invention.

Ce film de PAI nanochargé présente une bonne adhérence sur le substrat métallique qui est en outre fortement améliorée en raison du couplage d'une partie des silanols avec le support métallique.

Le polymère tel que le PAI, et plus encore dans le cas d'un polyamide-acide amique, contient beaucoup de terminaisons réactives, en particulier telles que les groupes carboxyliques et amides, qui vont pouvoir réagir avec le groupe réactif azoté de l'aminosilane ou du silazane. Le PAI en solution dans un solvant de type aprotique polaire (NEP, NMP, DMEU, diméthylsulfoxyde (DMSO) etc.) ou sous forme de poudre humide dans de l'eau est mis en émulsion dans l'eau par réaction avec l'aminosilane ou le silazane. Lors de ce procédé, les groupements aminosilanes ou silazanes se greffent à la chaîne PAI via leur terminaison $NH_2$ et NH respectivement. Il est également possible qu'une partie des aminosilanes puisse se greffer directement sur le polyamide-acide amique par leurs groupements alcoxy (méthoxy ou éthoxy ou sous la forme de silanols). Lorsque la mise en solution aqueuse est réalisée et compte-tenu de l'acidité locale du milieu due à la présence de groupes carboxyliques encore libres, on observe une hydrolyse des groupements alcoxysilanes en silanols ce qui renforce encore la compatibilisation avec l'eau. On complète si nécessaire la formulation avec un mélange d'alkoxysilane. Lors de l'étuvage de la composition et après évaporation de l'eau et des alcools, la réticulation de l'ensemble est obtenue par une réaction de condensation de type sol-gel qui crée un réseau de nanocharges de silice dans la matrice organique PAI et par une cyclisation des groupements imides. Ceci permet d'obtenir une structure hybride organique-inorganique avec la formation d'un réseau de silice parfaitement dispersé et de taille nanométrique dans la matrice PAI.

La présente invention a donc plus particulièrement pour objet une composition aqueuse (ou composition de semi-fini) comprenant un polyimide ou un polyamide-imide ou un polyamide-acide amique ainsi qu'une base de Lewis, un solvant aprotique polaire, et au moins 15 % d'eau par rapport au poids total de ladite composition, caractérisée en ce que la base de Lewis est un aminosilane ou un silazane.

De manière avantageuse, l'aminosilane ou le silazane sont présents dans ladite composition à raison de 0,1 à 10 % en poids par rapport au poids total de ladite composition.

De manière avantageuse, l'aminosilane est le 3-aminopropyltriéthoxysilane (APTES).

De manière avantageuse, le silazane est l'hexaméthyldisilazane.

De manière avantageuse, le solvant aprotique polaire est présent à raison de 1 à 70 % en poids par rapport au poids total de la composition.

De manière avantageuse, le solvant aprotique polaire est la N-éthylmorpholine, la N-éthylpyrrolidone ou le diméthylsulfoxyde.

La présente invention a encore pour objet une composition de primaire de revêtement antiadhésif comprenant une composition aqueuse selon l'invention telle que définie ci-dessus et une dispersion de résine fluorocarbonée.

La résine fluorocarbonée peut être choisie dans le groupe comprenant les polytétrafluoroéthylènes (PTFE), les copolymères de tétrafluoroéthylène et de perfluoropropylvinyléther (PFA), les copolymères de tétrafluoroéthylène et d'hexafluoropropène (FEP), les polyfluorures de vinylidène (PVDF), le MVA (copolymère de TFE/PMVE), les terpolymères TFE/PMVE/FAVE, l'ETFE, et leurs mélanges.

On utilisera de préférence le polytétrafluoroéthylène (PTFE), ou un mélange (PTFE/PFA) de polytétrafluoroéthylène (PTFE) et de copolymère de tétrafluoroéthylène et de perfluoropropylvinyléther (PFA), ou un mélange (PTFE/FEP) de polytétrafluoroéthylène (PTFE) et de copolymère de tétrafluoroéthylène et d'hexafluoropropène (FEP).

La présente invention a encore pour objet un procédé de préparation d'une composition aqueuse (ou composition de semi-fini) selon l'invention comprenant les étapes suivantes :

a) un polymère polyimide ou polyamide-imide ou polyamide-acide amique est mis en solution dans un solvant aprotique polaire pour former un mélange homogène;
b) une base de Lewis est introduite dans ledit mélange pour la fixer sur ledit polymère, la base de Lewis étant un aminosilane ou un silazane, ; et
c) de l'eau est ajoutée au mélange ainsi formé.

De manière optionnelle, une deuxième base de Lewis, qui n'est ni un silane, ni un silazane, peut être en outre ajoutée au mélange issu de l'étape c).

La présente invention a encore pour objet un procédé de préparation d'une composition de primaire de revêtement antiadhésif comprenant d) le mélange d'une composition aqueuse (ou composition de semi-fini) telle que définie précédemment ou telle qu'obtenue par le procédé de préparation d'une composition aqueuse tel que défini précédemment avec une dispersion de résine fluorocarbonée.

De manière optionnelle, des charges et/ou pigments peuvent être ajoutés au mélange de la composition aqueuse et de la dispersion de résine fluorocarbonée.

La présente invention a encore pour objet un procédé de fabrication d'un article comprenant les étapes suivantes :

A. la fourniture d'un substrat métallique présentant deux faces opposées ;

B. l'application sur l'une des faces dudit substrat d'au moins une couche de composition de primaire de revêtement antiadhésif telle que définie précédemment ou telle qu'obtenue par le procédé de préparation d'une composition de primaire tel que défini précédemment ;

C. l'application sur ladite couche de composition de primaire d'au moins une couche de composition de finition comprenant au moins une résine fluorocarbonée ; puis

D. la cuisson de l'ensemble à une température comprise entre 370°C et 430°C.

Enfin, la présente invention a encore pour objet un article susceptible d'être obtenu selon le procédé de fabrication d'un article selon l'invention.

Il s'agira par exemple d'un article culinaire dont l'une des faces constitue une face interne destinée à être en contact avec des aliments placés à l'intérieur dudit article et l'autre face est une face externe convexe destinée à être en contact avec une source de chaleur.

## EXEMPLES

### Tests

Détermination de l'extrait sec d'une composition aqueuse de semi-fini ou de primaire

**PRINCIPE**

L'extrait sec d'un produit est la partie solide résiduelle restant après évaporation des matières volatiles qu'il contient. La température et la durée de séchage jouent un grand rôle car les solvants à point d'ébullition élevé, les fractions de monomères, les diluants réactifs et les sous-produits de réaction (selon leur degré de rétention) quittent très lentement le film en formation. Il est donc très important de définir de façon très conventionnelle des conditions de séchage normalisées, aussi proches que possible de la pratique.

**MODE OPERATOIRE**

Pour mesurer cet extrait sec, on procède de la manière suivante :

- on pèse une coupelle en aluminium : $m_0$ = masse de la coupelle ;
- on dispose entre 0,5 g et 3 g de produit à étudier dans cette coupelle :
- on pèse la coupelle remplie : $m_1$ = masse de la coupelle remplie ;
- on place la coupelle dans une étuve à 210°C pendant deux heures ;
- après étuvage et après refroidissement on pèse la coupelle : $m_2$ = masse de la coupelle remplie après étuvage et refroidissement ;
- l'extrait sec est donné par la formule (1) ci-dessous :

$$\text{Extrait sec} = 100*[(m_2-m_0)/(m_1-m_0)]$$

Evaluation de la stabilité de la viscosité d'une composition aqueuse de semi-fini ou de primaire

Il s'agit d'évaluer la stabilité de la viscosité d'une composition aqueuse de semi-fini (sans PTFE) ou de primaire (avec PTFE et charges) appliquée par pulvérisation en mesurant les temps d'écoulement selon la norme DIN EN ISO 2433/ASTM D5125 au moyen d'une coupe 2,5 ou d'une coupe 4.

- La viscosité correspond au temps d'écoulement continu exprimé en secondes du volume de la coupe à travers l'orifice calibré. Le choix de la coupe est fait en fonction de la viscosité supposée du produit.
- Le suivi de l'évolution de la viscosité est réalisé par la mesure du temps d'écoulement continu du volume normalisé et à température ambiante tout de suite après la préparation des compositions, et par le suivi de l'évolution de cette viscosité dans le temps à température ambiante ;
- Les compositions une fois formulées sont mises en étuve à 40°C ; le suivi dans le temps de l'évolution du temps d'écoulement, et donc de la viscosité (évaluation de la stabilité de l'émulsion après vieillissement à 40°C), est alors réalisé.

**Mode opératoire et procédé**

Dans un réacteur, la résine PAI est introduite. La résine peut être soit sous forme d'une poudre humide (acide polyamique ou polyamide-acide amique (PAA) d'indice d'hydroxyle compris entre 40 et 200 meq de KOH/g), soit sous forme d'un polymère PAI en solution dans un solvant aprotique polaire.

De préférence, dans le cas où la résine PAI est sous forme d'une poudre, la poudre est solubilisée dans un solvant aprotique polaire, de préférence non toxique, voire non classé.

La réaction de neutralisation des groupements acides terminaux du PAI ou du PAA avec la fonction amine de l'aminosilane conduit à la mise en œuvre en phase aqueuse ou en phase eau + solvant de la résine PAI. Dans ces conditions, la condensation des groupements silanols sur eux-mêmes est réduite. De cette manière, on greffe chimiquement un alcoxysilane sur une résine PAI.

Puis, dans la phase suivante, on hydrolyse progressivement des groupements alcoxysilanes en groupements hydroxylés, silanols, qui par condensation lors de la cuisson forment un réseau nanostructuré de silice au sein de la matrice polymère.

La résine ainsi dispersée en phase aqueuse ou dans de l'eau mélangée avec un co-solvant peut être utilisée telle quelle dans les formulations de primaires fluorés.

Ce mélange reste stable malgré l'alcalinité de la dispersion de PTFE, la condensation des silanols, générant une phase inorganique très finement dispersée et plus ou moins liée à la matrice PAI, ne s'observant que lors de la cuisson.

## EXEMPLE 1 : SEMI-FINI comparatif SFc1

**Préparation d'une composition aqueuse à base de PAI (poudre) et de triéthylamine**

On réalise une composition aqueuse de semi-fini SFc1 comportant les composés suivants, leurs quantités respectives étant indiquées en g :

| | |
|---|---|
| - polyamide-acide amique (à 35 % d'extrait sec) : | 103,0 g |
| - triéthylamine : | 21,4 g |
| - eau déminéralisée : | 485,0 g |
| TOTAL: | 609,4 g |

Pour réaliser la composition aqueuse de semi-fini SFc1, on procède comme suit :

- un mélange de l'eau et de la triéthylamine est introduit dans un réacteur ;
- le mélange obtenu est mis sous agitation, puis chauffé à une température de 65°C +/-5°C ;
- la poudre de polyamide-acide amique est ensuite introduite, sous agitation, dans le mélange ;
- le mélange ainsi obtenu est maintenu sous agitation à 65°C pendant au minimum 5 heures et jusqu'à 10 heures au maximum.

Les propriétés de la composition aqueuse SFc1 ainsi obtenue sont les suivantes :

- extrait sec théorique : 6 %
- extrait sec mesuré dans la composition : 6,3 %
- Il s'agit d'un produit translucide de couleur miel, visqueux.
- viscosité (en coupe 4 selon la norme DIN EN ISO 2433 / ASTM D5125) : 50 sec
- après mise en vieillissement à 40°C, le produit forme un gel après seulement 10 jours de stockage (pas d'écoulement, viscosité non mesurable).

## EXEMPLE 2 : SEMI-FINI comparatif SFc2

**Préparation d'une composition aqueuse à base de PAI (poudre), de triéthylamine et de silice colloïdale**

On réalise une composition aqueuse de semi-fini SFc2 comportant les composés suivants, leurs quantités respectives étant indiquées en g :

| | |
|---|---|
| - polyamide-acide amique (à 35 % d'extrait sec) : | 103,0 g |

(suite)

| | |
|---|---|
| - triéthylamine : | 21,4 g |
| - eau déminéralisée : | 485,0 g |
| - silice colloïdale (à 30 % d'extrait sec) : | 16,0 g |
| TOTAL : | 625,4 g |

Le taux de silice utilisée dans cette composition conduit à un taux final de silice dans le film sec de 11,6 % en poids par rapport au poids total du film sec.

Pour réaliser la composition aqueuse de semi-fini SFc2, on procède comme suit :

- un mélange de l'eau et de la triéthylamine est introduit dans un réacteur ;
- le mélange obtenu est mis sous agitation, puis chauffé à une température de 65°C +/-5°C ;
- la poudre de polyamide-acide amique est ensuite introduite, sous agitation, dans le mélange ;
- le mélange ainsi obtenu est maintenu sous agitation à 65°C pendant au minimum 5 heures et jusqu'à 10 heures au maximum ;
- le mélange obtenu est laissé refroidir puis la dispersion colloïdale de silice de taille de l'ordre de 40 à 200 nm est introduite dans le mélange à température ambiante.

Les propriétés de la composition aqueuse SFc2 ainsi obtenue sont les suivantes :

- extrait sec théorique : 6,6 %
- extrait sec mesuré dans la composition : 6,9 %
- Il s'agit d'un produit translucide de couleur miel, visqueux.
- viscosité (en coupe 4 selon la norme DIN EN ISO 2433/ASTM D5125) : 80 sec
- après mise en vieillissement à 40°C, le produit forme un gel après seulement 10 jours de stockage (pas d'écoulement, viscosité non mesurable).

## EXEMPLE 3 : SEMI-FINI SF1 selon l'invention

**Préparation d'une composition aqueuse à base de polyamide-acide amique (PAA) et d'aminosilane (avec un co-solvant)**

Le PAA utilisé a des groupements terminaux de l'ordre de 200 meq de KOH/g. On utilise une résine PAA commercialisée sous la dénomination TORLON AI 30LM de chez Solvay.

On utilise comme aminosilane du 3-aminopropyltriéthoxysilane en solution aqueuse, et en particulier le produit commercialisé par DEGUSSA sous la dénomination commerciale Dynasylan AMEO.

Le co-solvant utilisé est la N-éthylmorpholine ou 4-acétylmorpholine (RN-CAS : 1696-20-4).

On réalise une composition aqueuse de semi-fini SF1 comportant les composés suivants, leurs quantités respectives étant indiquées en g :

| | |
|---|---|
| - polyamide-acide amique (à 35,5 % d'extrait sec) : | 18,1 g |
| - N-éthylmorpholine : | 61,1 g |
| - 3-aminopropyltriéthoxysilane (APTES) (100 %) : | 1,1 g |
| - eau déminéralisée : | 19,7 g |
| - triéthylamine : | 0,9 g |
| TOTAL: | 100,9 g |

Le taux de silicium apporté par l'APTES dans cette composition conduit à un taux final de silicium dans le film sec de l'ordre de 2 % en poids par rapport au poids total du film sec.

Pour réaliser la composition aqueuse de semi-fini SF1, on procède comme suit :

- la poudre de polyamide-acide amique que l'on solubilise dans le solvant non étiqueté est introduite dans un réacteur ;
- le 3-aminopropyltriéthoxysilane (APTES) est ensuite introduit, sous agitation lente, dans le mélange ;
- le mélange est agité mécaniquement pendant au moins 2 heures avec une pale marine montée sur un mélangeur Rayneri ;

■ une solution limpide et homogène en solvant est ainsi obtenue ;

■ le système d'agitation est ensuite modifié : une pale cisaillante est montée sur le mélangeur Rayneri ;

■ l'eau est ensuite ajoutée au goutte à goutte avec une ampoule de coulée ayant un débit de l'ordre de 0,0015 g/min ;

■ un changement de phase solvant vers une phase aqueuse parfaitement dispersée est observé ;

■ une émulsion est obtenue : le produit est un produit laiteux et stable ;

■ pour améliorer la stabilité de la viscosité de cette émulsion de sol-gel, une base, telle que la triéthylamine, qui permet d'avoir une stabilité à l'ambiante de plusieurs semaines, est ajoutée.

Les propriétés de la composition aqueuse SF1 ainsi obtenue sont les suivantes :

- extrait sec théorique : 6,9 %
- extrait sec mesuré dans la composition : 7,2 %
- pH = 10,4
- Il s'agit d'un produit laiteux et stable.
- viscosité (en coupe 2,5 selon la norme DIN EN ISO 2433 / ASTM D5125) : 42 sec

## EXEMPLE 4 : SEMI-FINI SF2 selon l'invention

## Préparation d'une composition aqueuse à base de polyamide-acide amique (PAA) et d'aminosilane (avec un co-solvant)

Le PAA utilisé a des groupements terminaux de l'ordre de 200 meq de KOH/g. On utilise une résine PAA commercialisée sous la dénomination TORLON AI 30LM de chez Solvay.

On utilise comme aminosilane du 3-aminopropyltriéthoxysilane en solution aqueuse, et en particulier le produit commercialisé par DEGUSSA sous la dénomination commerciale Dynasylan AMEO.

Le co-solvant utilisé est le diméthylsulfoxyde (DMSO) qui est un solvant non étiqueté.

On réalise une composition aqueuse de semi-fini SF2 comportant les composés suivants, leurs quantités respectives étant indiquées en g :

| | |
|---|---|
| - polyamide-acide amique (à 35,5 % d'extrait sec) : | 18,1 g |
| - DMSO : | 61,1 g |
| - 3-aminopropyltriéthoxysilane (APTES) (100 %) : | 1,1 g |
| - eau déminéralisée : | 19,7 g |
| - triéthylamine : | 0,9 g |
| TOTAL : | 100,9 g |

Le taux de silicium apporté par l'APTES dans cette composition conduit à un taux final de silicium dans le film sec de l'ordre de 2 % en poids par rapport au poids total du film sec.

Pour réaliser la composition aqueuse de semi-fini SF2, on procède comme suit :

■ la poudre de polyamide-acide amique que l'on solubilise dans le solvant non étiqueté est introduite dans un réacteur ;

■ le 3-aminopropyltriéthoxysilane (APTES) est ensuite introduit, sous agitation lente, dans le mélange ;

■ le mélange est agité mécaniquement pendant au moins 2h avec une pale marine montée sur un mélangeur Rayneri ;

■ une solution limpide et homogène en solvant est ainsi obtenue ;

■ le système d'agitation est ensuite modifié : une pale cisaillante est montée sur le mélangeur Rayneri ;

■ l'eau est ensuite ajoutée au goutte à goutte avec une ampoule de coulée ayant un débit de l'ordre de 0,0015 g/min ;

■ un changement de phase solvant vers une phase aqueuse parfaitement dispersée est observé ;

■ une émulsion est obtenue : le produit est un produit laiteux et stable ;

■ pour améliorer la stabilité de la viscosité de cette émulsion de sol-gel, une base, telle que la triéthylamine, qui permet d'avoir une stabilité à l'ambiante de plusieurs semaines, est ajoutée.

Les propriétés de la composition aqueuse SF2 ainsi obtenue sont les suivantes :

7

- extrait sec théorique : 6,9 %
- extrait sec mesuré dans la composition : 7,2 %
- pH = 10,4
- Il s'agit d'un produit laiteux et stable.
- viscosité (en coupe 2,5 selon la norme DIN EN ISO 2433 / ASTM D5125) : 42 sec

## EXEMPLE 5 : SEMI-FINI SF3 selon l'invention

**Préparation d'une composition aqueuse à base de polyamide-imide (PAI) (avec un co-solvant) et d'aminosilane**

Le PAI utilisé est une résine PAI, commercialisée sous la dénomination RHODEFTAL 210ES de chez HUNTSMAN dont l'extrait sec est de 29 % dans de la N-éthylpyrrolidone.

On utilise comme aminosilane du 3-aminopropyltriéthoxysilane en solution aqueuse, et en particulier le produit commercialisé par DEGUSSA sous la dénomination commerciale Dynasylan AMEO.

On réalise une composition aqueuse de semi-fini SF3 comportant les composés suivants, leurs quantités respectives étant indiquées en g :

| | |
|---|---|
| - polyamide-imide (à 29 % d'extrait sec) : | 24,0 g |
| - N-éthylpyrrolidone : | 53,5 g |
| - 3-aminopropyltriéthoxysilane (APTES) (100 %) : | 1,2 g |
| - eau déminéralisée : | 21,3 g |
| - triéthylamine : | 0,9 g |
| TOTAL: | 100,9 g |

Le taux de silicium apporté par l'APTES dans cette composition conduit à un taux final de silicium dans le film sec de l'ordre de 2 % en poids par rapport au poids total du film sec.

Pour réaliser la composition aqueuse de semi-fini SF3, on procède comme suit :

- le polyamide-imide que l'on dilue dans la N-éthylpyrrolidone est introduit dans un réacteur ;
- le 3-aminopropyltriéthoxysilane (APTES) est ensuite introduit, sous agitation lente, dans le mélange ;
- le mélange est agité mécaniquement pendant au moins 2h avec une pale marine montée sur un mélangeur Rayneri ;
- une solution limpide et homogène en solvant est obtenue ;
- le système d'agitation est ensuite modifié : une pale cisaillante est montée sur le mélangeur Rayneri ;
- l'eau est ensuite ajoutée au goutte à goutte avec une ampoule de coulée ayant un débit de l'ordre de 0,0015 g/min ;
- un changement de phase solvant vers une phase aqueuse parfaitement dispersée est observé ;
- une émulsion est obtenue : le produit est un produit laiteux et stable ;
- pour améliorer la stabilité de la viscosité de cette émulsion de sol-gel, une base, telle que la triéthylamine, qui permet d'avoir une stabilité à l'ambiante de plusieurs semaines, est ajoutée.

Les propriétés de la composition aqueuse SF3 ainsi obtenue sont les suivantes :

- extrait sec théorique : 7.42 %
- extrait sec mesuré dans la composition : 7,6 %
- pH = 10,4
- Il s'agit d'un produit laiteux et stable.
- viscosité (en coupe 2,5 selon la norme DIN EN ISO 2433 / ASTM D5125) : 45 sec

## EXEMPLE 6 : SEMI-FINI SF4 selon l'invention

**Préparation d'une composition aqueuse à base de polyamide-acide amique (PAA) et de silazane (avec un co-solvant)**

Le PAA utilisé a des groupements terminaux de l'ordre de 200 meq de KOH/g. On utilise une résine PAA commercialisée sous la dénomination TORLON AI 30LM de chez Solvay.

On utilise, comme silazane, l'hexaméthyldisilazane de masse molaire 161,39 g/mol.

Le co-solvant utilisé est la N-éthylmorpholine (ou 4-acétylmorpholine) (RN-CAS : 1696-20-4).

On réalise une composition aqueuse de semi-fini SF4 comportant les composés suivants, leurs quantités respectives étant indiquées en g :

| | |
|---|---|
| - polyamide-acide amique (à 35,5 % d'extrait sec) : | 18,1 g |
| - N-éthylmorpholine : | 61,1 g |
| - hexaméthyldisilazane (100 %) : | 1,1 g |
| - eau déminéralisée : | 19,7 g |
| - triéthylamine : | 0,9 g |
| TOTAL: | 100,9 g |

Le taux de silicium apporté par l'APTES dans cette composition conduit à un taux final de silicium dans le film sec de l'ordre de 3 % en poids par rapport au poids total du film sec.

Pour réaliser la composition aqueuse de semi-fini SF4, on procède comme suit :

- la poudre de polyamide-acide amique que l'on solubilise dans le solvant non étiqueté est introduite dans un réacteur ;
- l'hexaméthyldisilazane est ensuite introduit, sous agitation lente, dans le mélange ;
- le mélange est agité mécaniquement pendant au moins 2h avec une pale marine montée sur un mélangeur Rayneri ;
- une solution limpide et homogène en solvant est obtenue ;
- le système d'agitation est ensuite modifié : une pale cisaillante est montée sur le mélangeur Rayneri ;
- l'eau est ensuite ajoutée au goutte à goutte avec une ampoule de coulée ayant un débit de l'ordre de 0,0015 g/min ;
- un changement de phase solvant vers une phase aqueuse parfaitement dispersée est observé ;
- une émulsion est obtenue : le produit est un produit laiteux et stable ;
- pour améliorer la stabilité de la viscosité de cette émulsion de sol-gel, une base, telle que la triéthylamine, qui permet d'avoir une stabilité à l'ambiante de plusieurs semaines, est ajoutée.

Les propriétés de la composition aqueuse SF4 ainsi obtenue sont les suivantes :

- extrait sec théorique : 6,9 %
- extrait sec mesuré dans la composition : 7,2 %
- pH = 10,4
- Il s'agit d'un produit laiteux et stable.
- viscosité (en coupe 2,5 selon la norme DIN EN ISO 2433 / ASTM D5125) : 39 sec

## EXEMPLE 7 : PRIMAIRE comparatif Pc1

### Préparation d'un primaire fluoré Pc1 à partir du semi-fini SFc1

On réalise une composition aqueuse fluorée de primaire à partir du semi-fini SFc1 comportant les composés suivants, leurs quantités respectives étant indiquées en g :

| | |
|---|---|
| - dispersion colloïdale de PTFE (à 60 % d'extrait sec) : | 289,3 g |
| - noir de carbone (à 25 % d'extrait sec dans l'eau) : | 40,8 g |
| - silice colloïdale (à 30 % d'extrait sec dans l'eau) : | 164,6 g |
| - semi-fini SFc1 (à 6 % d'extrait sec dans l'eau) : | 237,0 g |
| - système de tensio-actifs (à 12 % d'extrait sec dans l'eau) : | 51,3 g |
| - eau déminéralisée : | 421,8 g |
| - 3-aminopropyltriéthoxysilane (APTES) (100 %) : | 9,4 g |
| - triéthylamine : | 2,0 g |
| TOTAL: | 1216,2 g |

Le taux de silicium apporté par l'APTES dans cette composition conduit à un taux final de silicium dans le film sec de l'ordre de 0.5 % en poids par rapport au poids total du film sec.

Les propriétés de la composition de primaire Pc1 ainsi obtenue sont les suivantes :

- extrait sec théorique : 21,7 %
- extrait sec mesuré dans la composition : 22,4 %
- pH = 8,5
- viscosité (en coupe 2,5 selon la norme DIN EN ISO 2433 / ASTM D5125) : 65 sec
- Il s'agit d'un produit laiteux mais très instable qui décante de façon irréversible.

L'ajout d'APTES en post-addition dans un primaire fluoré conduit à une condensation rapide des groupements silanols avec la formation d'un gel irréversible. Ce primaire n'est pas applicable sur un support.

### EXEMPLE 8 : PRIMAIRE P1 selon l'invention

**Préparation d'un primaire fluoré P1 à partir du semi-fini SF1**

On réalise une composition aqueuse fluorée de primaire à partir du semi-fini SF1 comportant les composés suivants, leurs quantités respectives étant indiquées en g :

| | |
|---|---|
| - dispersion colloïdale de PTFE (à 60 % d'extrait sec) : | 298,3 g |
| - noir de carbone (à 25 % d'extrait sec dans l'eau) : | 42,1 g |
| - silice colloïdale (à 30 % d'extrait sec dans l'eau) : | 169,7 g |
| - semi-fini SF1 (à 6,9 % d'extrait sec dans l'eau + NEM) : | 213,2 g |
| - système de tensio-actifs (à 12 % d'extrait sec dans l'eau) : | 53,0 g |
| - eau déminéralisée : | 223,7 g |
| TOTAL: | 1000,0 g |

Les propriétés du mélange aqueux ainsi obtenu sont les suivantes :

- extrait sec théorique : 26,2 %
- extrait sec mesuré dans la composition : 25,9 %
- pH = 8,5
- viscosité (en coupe 2,5 selon la norme DIN EN ISO 2433 / ASTM D5125) : 50 sec
- Il s'agit d'un produit laiteux qui est très stable, pas d'évolution de la viscosité à l'ambiante de plus de 5 % sur 2 mois de stockage.

**Revendications**

1. Composition aqueuse comprenant :

   - un polyimide ou un polyamide-imide ou un polyamide-acide amique,
   - une base de Lewis,
   - un solvant aprotique polaire, et
   - au moins 15 % d'eau par rapport au poids total de ladite composition, **caractérisée en ce que** la base de Lewis est un aminosilane ou un silazane.

2. Composition selon la revendication 1, dans laquelle l'aminosilane ou le silazane sont présents dans ladite composition à raison de 0,1 à 10 % en poids par rapport au poids total de ladite composition.

3. Composition selon l'une quelconque des revendications 1 et 2, dans laquelle l'aminosilane est le 3-aminopropyltriéthoxysilane (APTES).

4. Composition selon l'une quelconque des revendications 1 et 2, dans laquelle le silazane est l'hexaméthyldisilazane.

5. Composition selon l'une quelconque des revendications précédentes, dans laquelle le solvant aprotique polaire est présent à raison de 1 à 70 % en poids par rapport au poids total de la composition.

**6.** Composition selon l'une quelconque des revendications précédentes, dans laquelle le solvant aprotique polaire est la N-éthylmorpholine.

**7.** Composition de primaire de revêtement antiadhésif comprenant une composition aqueuse telle que définie selon l'une quelconque des revendications précédentes et une dispersion de résine fluorocarbonée.

**8.** Composition selon la revendication 7, dans laquelle la résine fluorocarbonée est choisie dans le groupe comprenant les polytétrafluoroéthylènes (PTFE), les copolymères de tétrafluoroéthylène et de perfluoropropylvinyléther (PFA), les copolymères de tétrafluoroéthylène et d'hexafluoropropène (FEP), les polyfluorures de vinylidène (PVDF), le MVA (copolymère de TFE/PMVE), les terpolymères TFE/PMVE/FAVE, l'ETFE, et leurs mélanges.

**9.** Composition selon la revendication 8, dans laquelle la résine fluorocarbonée est le polytétrafluoroéthylène (PTFE), ou un mélange (PTFE/PFA) de polytétrafluoroéthylène (PTFE) et de copolymère de tétrafluoroéthylène et de perfluoropropylvinyléther (PFA), ou un mélange (PTFE/FEP) de polytétrafluoroéthylène (PTFE) et de copolymère de tétrafluoroéthylène et d'hexafluoropropène (FEP).

**10.** Procédé de préparation d'une composition de primaire de revêtement antiadhésif comprenant les étapes suivantes :

a) un polymère polyimide ou polyamide-imide ou polyamide-acide amique est mis en solution dans un solvant aprotique polaire pour former un mélange homogène ;
b) une base de Lewis est introduite dans ledit mélange pour la fixer sur ledit polymère, la base de Lewis est un aminosilane ou un silazane ;
c) de l'eau est ajoutée au mélange ainsi formé ; et
d) une dispersion fluorocarbonée est ajoutée au mélange issu de l'étape c).

**11.** Procédé de fabrication d'un article comprenant les étapes suivantes :

A. la fourniture d'un substrat métallique présentant deux faces opposées ;
B. l'application sur l'une des faces dudit substrat d'au moins une couche de composition de primaire telle que définie selon l'une quelconque des revendications 7 à 9 ou obtenue selon le procédé de la revendication 10 ;
C. l'application sur ladite couche de composition de primaire d'au moins une couche de composition de finition comprenant au moins une résine fluorocarbonée ; puis
D. la cuisson de l'ensemble à une température comprise entre 370°C et 430°C.

**12.** Article susceptible d'être obtenu selon le procédé tel que défini selon la revendication 11.

**13.** Article selon la revendication 12, constituant un article culinaire dont l'une des faces constitue une face interne destinée à être en contact avec des aliments placés à l'intérieur dudit article et l'autre face est une face externe convexe destinée à être en contact avec une source de chaleur.

**Patentansprüche**

**1.** Wässrige Zusammensetzung, umfassend:

- ein Polyimid oder ein Polyamidimid oder eine Polyamid-Amidsäure,
- eine Lewisbase,
- ein aprotisches polares Lösemittel und
- bezogen auf das Gesamtgewicht der Zusammensetzung mindestens 15 % Wasser, **dadurch gekennzeichnet, dass** die Lewisbase ein Aminosilan oder ein Silazan ist.

**2.** Zusammensetzung nach Anspruch 1, wobei das Aminosilan oder das Silazan in der Zusammensetzung bezogen auf das Gesamtgewicht der Zusammensetzung in einer Menge von 0,1 bis 10 Gewichts-% vorhanden sind.

**3.** Zusammensetzung nach einem der Ansprüche 1 und 2, wobei das Aminosilan 3-Aminopropyltriethoxysilan (APTES) ist.

**4.** Zusammensetzung nach einem der Ansprüche 1 und 2, wobei das Silazan Hexamethyldisilazan ist.

5. Zusammensetzung nach einem der vorstehenden Ansprüche, wobei das aprotische polare Lösemittel bezogen auf das Gesamtgewicht der Zusammensetzung in einer Menge von 1 bis 70 Gewichts-% vorhanden ist.

6. Zusammensetzung nach einem der vorstehenden Ansprüche, wobei das aprotische polare Lösemittel N-Ethylmorpholin ist.

7. Antihaftbeschichtung-Grundierungszusammensetzung, umfassend eine wässrige Zusammensetzung wie nach einem der vorstehenden Ansprüche definiert und eine Fluorkohlenstoffharzdispersion.

8. Zusammensetzung nach Anspruch 7, wobei das Fluorkohlenstoffharz ausgewählt ist aus der Gruppe, umfassend Polytetrafluorethylene (PTFE), Copolymere von Tetrafluorethylen und Perfluorpropylvinylether (PFA), Copolymere von Tetrafluorethylen und Hexafluorpropen (FEP), Polyvinylidenfluorid (PVDF), MVA (Copolymer von TFE/PMVE), Terpolymere TFE/PMVE/FAVE, ETFE und deren Mischungen.

9. Zusammensetzung nach Anspruch 8, wobei das Fluorkohlenstoffharz Polytetrafluorethylen (PTFE) oder eine Mischung (PTFE/PFA) von Polytetrafluorethylen (PTFE) und Copolymer von Tetrafluorethylen und Perfluorpropylvinylether (PFA) oder eine Mischung (PTFE/FEP) von Polytetrafluorethylen (PTFE) und Copolymer von Tetrafluorethylen und Hexafluorpropen (FEP) ist.

10. Zubereitungsverfahren einer Antihaftbeschichtung-Grundierungszusammensetzung, umfassend die folgenden Schritte:

a) ein polymeres Polyimid oder Polyamidimid oder eine Polyamid-Amidsäure wird in einem polaren aprotischen Lösemittel in Lösung gebracht, um eine homogene Mischung zu bilden;
b) eine Lewisbase wird in die Mischung eingebracht, um sie auf dem Polymer zu fixieren, wobei die Lewisbase ein Aminosilan oder ein Silazan ist;
c) Wasser wird der so gebildeten Mischung hinzugefügt; und
d) eine Fluorkohlenstoffdispersion wird der aus Schritt c) stammenden Mischung hinzugefügt.

11. Herstellungsverfahren eines Artikels, umfassend die folgenden Schritte:

A. das Bereitstellen eines zwei gegenüberliegende Seiten aufweisenden metallischen Substrats;
B. das Auftragen auf eine der Flächen des Substrats von mindestens einer Grundierungszusammensetzungsschicht wie nach einem der Ansprüche 7 bis 9 definiert oder nach dem Verfahren von Anspruch 10 erhalten;
C. das Auftragen auf die Grundierungszusammensetzungsschicht von mindestens einer Endfertigungszusammensetzungsschicht, umfassend mindestens ein Fluorkohlenstoffharz; danach
D. die Aushärtung der Gesamtheit bei einer Temperatur im Bereich zwischen 370°C und 430 °C.

12. Artikel, der nach dem Verfahren wie nach Anspruch 11 definiert erhalten werden kann.

13. Artikel nach Anspruch 12, der einen kulinarischen Artikel konstituiert, von dem eine der Flächen eine Innenfläche konstituiert, dazu bestimmt, in Kontakt mit im Inneren des Artikels platzierten Nahrungsmitteln zu sein, und die andere Fläche eine konvexe Außenfläche ist, dazu bestimmt, in Kontakt mit einer Wärmequelle zu sein.

**Claims**

1. Aqueous composition comprising:

- a polyimide or a polyamide-imide or polyamide-amidic acid,
- a Lewis base,
- a polar aprotic solvent, and
- at least 15% water compared to the total weight of said composition, **characterised in that** the Lewis base is an aminosilane or a silazane.

2. Composition according to claim 1, wherein aminosilane or silazane are present in said composition at a rate of 0.1 to 10% by weight compared with the total weight of said composition.

3. Composition according to any one of claims 1 and 2, wherein the aminosilane is 3-aminopropyltriethoxysilane (APTES).

4. Composition according to any one of claims 1 and 2, wherein the silazane is hexamethyldisilazane.

5. Composition according to any one of the preceding claims, wherein the polar aprotic solvent is present at a rate of 1 to 70% by weight compared with the total weight of the composition.

6. Composition according to any one of the preceding claims, wherein the polar aprotic solvent is N-ethylmorpholine.

7. Primary anti-adhesive coating composition comprising an aqueous composition such as defined according to any one of the preceding claims and a dispersion of fluorocarbon resin.

8. Composition according to claim 7, wherein the fluorocarbon resin is selected from the group comprising polytetrafluoroethylenes (PTFE), tetrafluoroethylene and perfluoropropylvinylether copolymers (PFA), tetrafluoroethylene and hexafluoropropene copolymers (FEP), polyvinylidene fluorides (PVDF), MVA (TFE/PMVE copolymer), TFE/PMVE/FAVE terpolymers, ETFE, and their mixtures.

9. Composition according to claim 8, wherein the fluorocarbon resin is polytetrafluoroethylene (PTFE), or a mixture (PTFE/PFA) of polytetrafluoroethylene (PTFE) and tetrafluoroethylene and perfluoropropylvinylether copolymer (PFA), or a mixture (PTFE/FEP) of polytetrafluoroethylene (PTFE) and tetrafluoroethylene and hexafluoropropene copolymer (FEP).

10. Method for preparing a primary anti-adhesive coating composition comprising the following steps:

   a) a polyamide polymer or polyamide-imide or polyamide-amidic acid is put in a solution in a polar aprotic solvent to form a homogenous mixture;
   b) a Lewis base is introduced in said mixture to fix it on said polymer, the Lewis base is an aminosilane or a silazane;
   c) water is added to the mixture thus formed; and
   d) a fluorocarbon dispersion is added to the mixture from step c).

11. Method for manufacturing an article comprising the following steps:

   A. the supply of a metal substrate having two opposite faces;
   B. the application on one of the faces of said substrate of at least one primary composition layer such as defined according to any one of claims 7 to 9 or obtained according to the method of claim 10;
   C. the application on said primary composition layer of at least one finishing composition layer comprising at least one fluorocarbon resin; then
   D. the cooking of the assembly at a temperature comprised between 370°C and 430°C.

12. Article which can be obtained according to the method such as defined according to claim 11.

13. Article according to claim 12, constituting a cooking article of which one of the faces constitutes an inner face intended to be in contact with food placed inside said article and the other face is an outer convex face intended to be in contact with a heat source.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 0386379 A

- FR 2625450

**Littérature non-brevet citée dans la description**

- **PENG LIU.** *Iranian polymer Journal,* 2005, vol. 14 (11), 968-972